# EUROPEAN PATENT SPECIFICATION

(11) **EP 2 454 287 B1**
(45) Date of publication and mention of the grant of the patent: **17.04.2013**
(21) Application number: 09790379.3
(22) Date of filing: 14.07.2009
(51) Int. Cl.: C08F 2/02, C08F 10/02, C08F 4/38

(54) **HIGH PRESSURE RADICAL POLYMERIZATION PROCESS**
HOCHDRUCK-RADIKALPOLYMERISATIONSVERFAHREN
PROCÉDÉ DE POLYMÉRISATION PAR RADICAUX À HAUTE PRESSION

(43) Date of publication of application: 23.05.2012
(73) Proprietor: Exxonmobil Chemical Patents Inc., Baytown, TX 77520-2102 (US)
(72) Inventor: GOOSSENS, Ivo, T., B-1880 Kapelle-op-den-bos (BE); NAETS, Jan, J., B-3012 Leuven (BE)
(74) Representative: Gerstberger, Gisela
(86) International application number: PCT/US2009/050491
(87) International publication number: WO 2011/008197

(56) References cited:
- WO-A1-2005/049664
- WO-A1-2008/112373
- US-A- 2 865 904
- US-A- 3 299 033

## Description

### FIELD OF THE INVENTION

The present invention relates to a high pressure radical polymerization process wherein the polymerization is initiated with one or more organic peroxides as polymerization initiator(s), dissolved in a hydrocarbon solvent.

### BACKGROUND OF THE INVENTION

High pressure reactor polymerization plants convert relatively low cost olefin monomer (generally ethylene, optionally in combination with one or more comonomers such as vinyl acetate) into valuable polyolefin product. Such processes using oxygen or organic free-radical initiators, in particular peroxide initiators, are known in the art and have been used in industry for a long time. The polymerization takes place at high temperatures and pressures and is highly exothermic. The resulting polymer is a low density polyethylene (LDPE), optionally containing comonomers. See for example Ullmann's Encyclopedia of Technical Chemistry, 4th edition, vol. 19, 1980, p. 169-178.

High pressure polymerization processes are carried out in autoclave or tubular reactors. In principle, the autoclave and the tubular polymerization processes are very similar, except for the design of the reactor itself. The plants generally use two main compressors to compress the monomer feed each with multiple stages, arranged in series: a primary compressor provides an initial compression of the monomer feed, and a secondary (high pressure) compressor increases the pressure generated by the primary compressor to the level at which polymerization takes place in the reactor, which is typically about 210 to about 320 MPa for a tubular reactor and about 120 to about 200 MPa for an autoclave reactor.

The compressed monomer feed enters the reactor system, where the polymerization initiator (typically an organic peroxide) is injected to initiate the polymerization reaction, and optionally a chain transfer agent, which is introduced either into the primary compressor or at the suction of the secondary compressor. Usually, a mixture of different organic peroxides with different half-life time temperatures is used in accordance with the desired reaction profile. The organic peroxide (mixture) is diluted in an inert organic solvent for reasons of safety and for easier handling and metering.

In case of a continuous reaction in a tubular reactor, the polymerizing mixture containing one or more types of monomer(s), initiator, solvent, and optionally chain transfer agent, passes through the tubular reactor (containing several adjacent reaction segments or zones coupled together) in a turbulent, plug-flow manner. The tubular reactor has an initial part, to heat up compressed monomer feed to the reaction start temperature. The peroxide initiator (mixture) is then injected into the tubular reactor and decomposes into free radicals that initiate polymerization. Downstream of the first initiator injection point, one or more further reaction zones may be located along the length of the reactor where more initiator is injected. See, for example, WO 2004/108271, WO 2007/018870 or WO 2007/018871. The exothermic polymerization causes the temperature of the reaction fluid to rise. Part of the reaction heat is removed through external cooling of the tubular reactor (cooling jackets with circulating water) and/or addition of fresh monomer feed along the length of the reactor. Pressure drop and gas velocity is optimized through the use of a stepped reactor profile with different diameters of the reactor tubes. At the downstream end of the tubular reactor the mixture of polymer and unreacted monomers is cooled further for subsequent processing.

In case of an autoclave reactor, several monomer feed streams are injected into the reactor at one or more locations. The reactor is a continuous stirred tank reactor equipped with an agitator to ensure good mixing. The initiator (mixture) is injected at one or more points into the reactor to start the polymerization reaction. In an autoclave reactor the heat of reaction can be balanced by the injection of fresh, cooler monomer streams.

In both processes, i.e., using an autoclave or a tubular reactor, the reaction mixture is decompressed as it exits the reactor and is optionally cooled. It is then fed into a system of various separators in order to separate the polymer and recover unreacted monomers to recycle into the primary and/or secondary compressor.

Although high pressure polymerization of ethylene and optionally comonomers such as vinyl acetate is well understood and industrially used in a large scale, there is still room for improving various stages of the process. For example, one particular problem associated with the copolymerization of ethylene and a comonomer is the relative impurity of the unreacted comonomer. Ideally, both the unreacted ethylene and the unreacted comonomers are recycled and re-fed, via the compressors, into the polymerization reactor. However, especially in the case of vinyl acetate as comonomer, purity of the recycle comonomer is relatively poor, due to the presence of organic solvent (used in the process as initiator solvent), which can be costly to separate from the vinyl acetate. The organic solvents used in industry to dissolve the initiator (mixture) are usually higher boiling, inert organic solvents such as C₈ or higher aliphatic hydrocarbons (for example any isomers of octane, decane, or dodecane), see e.g. WO 2004/078800, p. 7, or EP-A-0101875, p. 4. Also, ketones are disclosed in the literature as suitable solvents for the polymerization initiators (and/or modifiers), see e.g. EP-A-1790670. As the unreacted comonomer cannot always be easily separated from such solvent, it either has to undergo more expensive (because energy-intensive) separation operations, such as distillation, or it is simply lost and has to be destroyed. Therefore, it is an object of the present invention to increase the purity of the recycle comonomer.

Another problem frequently encountered is that the final polymer product contains residual organic initiator solvent. For certain applications, e.g. food packaging or medical applications, this residual level of solvent is undesired and should ideally be reduced. Therefore, reducing this residual solvent level in the final polymer product without affecting the initiator performance and without substantially affecting other polymer properties (such as melting point, density, molecular weight distribution, melt index, performance properties, such as elastic, tensile and optical properties etc.) is a further object of the present invention.

These and other technical problems have been solved by the present invention by using a low boiling point hydrocarbon, as the solvent for the polymerization initiator (mixture). The present inventors have found that light hydrocarbons which are commonly used as chain transfer agents in the high pressure radical polymerization of ethylene and optionally comonomer(s) can actually be used to dissolve the polymerization initiator, such that no additional initiator solvent is required. In other words, these light hydrocarbons serve a dual function as initiator solvent and chain transfer agent. Thus, according to the present invention, a saturated or unsaturated, linear, branched or cyclic C₃ to C₅ hydrocarbon or a saturated or unsaturated, linear or branched C₆ hydrocarbon, is used as the solvent for the polymerization initiator (mixture), as described further herein below. These C₃ to C₆ hydrocarbon may serve at the same time as chain transfer agent, or optionally (an) additional chain transfer agent(s) may be added.

### SUMMARY OF THE INVENTION

The present invention relates to a process for the manufacture of ethylene homo- and copolymers, the process comprising the steps of:
introducing ethylene and optionally comonomer(s) into a reactor,
contacting the ethylene and optionally comonomer(s) in the reactor with a polymerization initiator composition under high pressure polymerization conditions to form ethylene homo- or copolymer, and
separating the ethylene homo- or copolymer;
wherein the polymerization initiator composition comprises at least one organic peroxide component dissolved in an organic solvent; and
wherein the organic solvent is a low boiling solvent, specifically a saturated or unsaturated, linear, branched or cyclic C₃ to C₄ hydrocarbon. Saturated or unsaturated, linear or branched C₃ or C₄ hydrocarbons are preferred organic solvents in the process of the present invention, with n-butane and propylene being particularly preferred in one embodiment. In another embodiment, the organic solvent is a saturated or unsaturated, linear or branched C₃ to C₄ hydrocarbon as described above, with the exception of n-butane and propylene. The invention and its preferred embodiments is described in further detail below.

### DETAILED DESCRIPTION

### Polymerization Initiator

Initiators are used to initiate the free radical polymerization of ethylene and optionally comonomer(s). Suitable initiators are organic peroxides. Usually, mixtures of different peroxides are used, the so-called "peroxide cocktails". Such a mixture of several peroxide initiators typically includes peroxides having different half-life times: generally ones that are active at the lowest temperature required for the given reaction start temperature (from about 120 to about 160°C) and ones that are active at the highest temperature (up to about 335°C) for the desired maximum temperature. Selection of an appropriate combination of different peroxides depends on the reactor-setup and the desired reaction temperature profile along the length of the reactor, and is within the general knowledge of a skilled person.

Organic peroxides useful as polymerization initiators are widely known in the art. Classes of peroxide initiators that are particularly useful for the present invention are for example the following: diacyl peroxides, dialkyl peroxydicarbonates, tert-alkyl peroxyesters, OO-tert-alkyl O-alkyl monoperoxycarbonates, di-tert-alkyl peroxides, di(tert-alkylperoxy)ketals, tert-alkyl hydroperoxides, and ketone peroxides.

Nonlimiting examples of useful peroxides are e.g. the following: dibenzoyl peroxide, dilauroyl peroxide, succinic acid peroxide, diisononanoyl peroxide, dioctanoyl peroxide, tert-butylperoxybenzoate, tert-butylperoxyacetate, tert-butylperoxymaleate, tert-butyl 2-ethylperoxyhexanoate, tert-butyl peroxy-3,5,5-trimethylhexanoate, tert-amyl 2-ethylperoxyhexanoate, 2,5-di(2-ethylhexanoyl-peroxy)2,5-dimethyl-hexane, tert-butylperoxypivalate, alpha-cumyl peroxyneoheptanoate, 3-hydroxy-1,1-dimethylbutyl peroxyneodecanoate, OO-tert-butyl-O-(isopropyl)monoperoxycarbonate, OO-tert-amyl-O-(2-ethylhexyl)monoperoxycarbonate, ethyl-3,3-di(tert-amylperoxy)butyrate, n-butyl-4,4-di(tert-butylperoxy)valerate, 1,1-di(tert-butylperoxy)cyclohexane, 2,2-di(tert-butylperoxy)butane, 1,1-di(tert-amylperoxy)cyclohexane, 2,5-di-(tert-butylperoxy)-2,5-dimethyl-3-hexyne, 2,5-di-(tert-butylperoxy)-2,5-dimethyl-hexane, 2,5-di(tert-butylperoxy)-2,5-dimethylhexane, 1,3(4)-bis (2-(tert-butyl-peroxy)-1-methylethyl)-benzene, di(tert-butyl)peroxide (DTBP), di(tert-amyl)peroxide, dicumylperoxide, tert-butyl cumyl peroxide, tert-butyl peroxyisopropylcarbonate, tert-butyl peroxyisobutyrate, di(n-propyl)peroxydicarbonate, di(sec-butyl)peroxydicarbonate, di(2-ethylhexyl)peroxydicarbonate, di(n-hexadecyl)peroxydicarbonate, di(4-tert-butylcyclohexyl)peroxydicarbonate, tert-butylhydroperoxide, tert-amylhydroperoxide, alpha-cumylhydroperoxide, 2,5-dihydroperoxy-2,5-dimethylhexane, para-menthane hydroperoxide, m/p-isopropyl-alpha-cumyl hydroperoxide. Such peroxides are marketed for example under the trade name Trigonox^{™} and Perkadox^{™} by AkzoNobel, or Luperox^{™} by Arkema.

Preferred polymerization initiators useful in the polymerization initiator compositions of the present invention are peroxybenzoates, peroxypivalates, peroxyhexanoates, peroxyoctanoates, peroxynonanoates, and peroxydecanoates. Examples of particularly preferred initiators for use in the present invention are tert-butylperoxybenzoate, tert-butyl peroxy-3,5,5-trimethylhexanoate, tert-butyl-2 ethylperoxyhexanoate, tert-butyl peroxyisobutyrate, di(2-ethylhexyl)peroxycarbonate, tert-butylperoxypivalate, 2,2-di(tert-butylperoxy)butane, di(tert-butyl)peroxide (DTBP), di(sec-butyl)peroxydicarbonate, t-amyl versions of tert-butyl perneodecanoate and of tert-butyl perpivalate, and any mixtures of the aforementioned.

Preferred initiator mixtures, especially for tubular reactors contain a minimum of 1 and up to 5 different types of initiators. Suitable mixtures of different organic peroxides, commonly referred to as peroxide cocktails, are known to those skilled in the art.

### Polymerization Initiator Composition

The polymerization initiator composition used according to the present invention comprises at least one, preferably several, polymerization initiators as described above, dissolved in an organic solvent, as further described below, and optionally one or more additional chain transfer agents, also as further described below.

The peroxide initiators (or initiator mixtures) may constitute from about 5 to about 50 weight% of the polymerization initiator composition, preferably from about 5 to about 40 weight%, more preferably from about 10 to about 40 weight%.

Optionally, in case an additional chain transfer agent (different from the initiator solvent) is used, such additional chain transfer agent as described above may be added to the reactor together with the monomer feed, or via one or more separate injection points. The amount of the transfer agent can be up to the concentration in the reaction mixture required to control the melt index of the product up to the required specification.

Preferably, the organic solvent as described above constitutes from about 50 to about 95 weight% of the entire solution comprising the peroxide(s) in the organic solvent, more preferably from about 65 to about 85 weight%, and most preferably from about 70 to about 85 weight%.

Based on the monomer feed (ethylene and optionally comonomer(s)), the one or more polymerization initiator(s) constitute from about 30 to about 1500 weight ppm, preferably from about 50 to about 1000 weight ppm.

The organic solvent in which the initiator(s) is/are dissolved may be used in an amount corresponding to about 100 to about 5000 weight ppm, preferably about 250 to about 3000 weight ppm" with respect to the monomer (ethylene and optionally comonomer(s)) feed.

The polymerization initiator compositions according to the present invention may further contain conventional additives, such as radical scavengers to stabilize the initiator composition during storage.

### Organic Solvent

The organic solvent used according to the present invention to dissolve the peroxide initiator(s) is a low boiling hydrocarbon, and specifically a saturated or unsaturated, linear, branched or cyclic C₃ to C₄ hydrocarbon, or a mixture of any of these. Preferably, the organic solvent is a saturated or unsaturated, linear or branched C₃ or C₄ hydrocarbon, or a mixture of any of these. Particularly, the organic solvent may be any isomer of propane, propene or propyne, butane, butene or butyne. Specifically, the initiator solvent may be n-propane, cyclopropane, propene, propyne, n-butane, isobutane, cyclobutane, methyl-cyclopropane, 1-butene, 2-butene, 1,3-butadiene, 2-methyl-propene, 1-butyne or 2-butyne. The organic solvent may also be a mixture of any of the solvents listed hereinabove.

The organic solvents suitable for dissolving peroxide polymerization initiators according to the present invention may also be characterized by their atmospheric boiling point. Generally, the C₃ to C₄ hydrocarbons, as described above, suitable for use in the process of the present invention, have a boiling point of below about 70°C, preferably of 60°C or lower, more preferably of 50°C or lower, and most preferably even of 40 °C or lower.

Particularly preferred organic solvents according to the present invention are saturated or unsaturated C₃ or C₄ hydrocarbons. N-butane and propene (propylene) are especially preferred initiator solvents according to the present invention, but also n- propane and isobutylene are preferred solvents. Mixtures with higher boiling solvents are desirable if needed for safety reasons to avoid runaway reactions. Further, the combination (type and amount) of individual initiators in a polymerization initiator composition according to the present invention may vary, depending on the location of the injection point. In other words, the initiator combination may vary from one injection point to the next, in order to optimize the desired temperature profile along the length of the reactor.

In a different embodiment of the present invention, the organic solvent used according to the present invention to dissolve the peroxide initiator(s) is a C₃ to C₄ hydrocarbon as defined above, with the exception of n-butane and propylene.

### Chain Transfer Agent (Modifier)

The terms "modifier" and "chain transfer agent" are used interchangeably herein and refer to a component that can be added to the polymerization process to control the molecular weight of the polymer by promoting chain transfer.

Preferred chain transfer agents include propylene, isobutylene, 1-butene, 2-butene, propionaldehyde, acetaldehyde, n-butane, and n-hexane. In one embodiment of the present invention, the initiator solvent (i.e., the C₃ to C₆ hydrocarbon as described above) also serves as the chain transfer agent. Put another way, the advantage of the present invention is that the compounds commonly used as chain transfer agents can serve at the same time as solvent for the peroxide initiator. For example, propylene and n-butane can be used as the initiator solvent, but of course act at the same time as chain transfer agents. The use of an organic initiator solvent that is also a chain transfer agent is a preferred embodiment of the present invention, as it has many advantages: It avoids or reduces the need to add additional transfer agent, and thus handling of an additional raw material thereby saving cost. Also, process control may be facilitated. As the transfer agent (also serving as solvent for the initiator) is incorporated into the polymer and therefore partly consumed, less solvent needs to be recycled and losses via the purge gas are reduced. This saves energy and raw material (and thus again reduces costs) which would otherwise be needed for solvent isolation and purification operations as well as the actual recycle pumping.

In case the initiator solvent chosen is not or not an efficient enough chain transfer agent itself, or the chain transfer activity should be further tailored (e.g. to introduce short-chain branches), one or more (additional) chain transfer agents may be comprised in the polymerization initiator composition.

In addition to the above-mentioned transfer agents, further non-limiting examples of chain transfer agents are tetramethylsilane, cyclopropane, sulfur hexafluoride, methane, t-butanol, perfluoropropane, deuterobenzene, ethane, ethylene oxide, 2,2-dimethylpropane, benzene, dimethyl sulfoxide, vinyl methyl ether, methanol, propane, 2-methyl-3-buten-2-ol, methyl acetate, t-butyl acetate, methyl formate, ethyl acetate, butane, triphenylphosphine, methylamine, methyl benzoate, ethyl benzoate, N,N-diisopropylacetamide, 2,2,4-trimethylpentane, n-hexane, isobutane, dimethoxymethane, ethanol, n-heptane, n-butyl acetate, n-hexane, cyclohexane, methylcyclohexane, 1,2-dichloroethane, acetronitrile, N-ethylacetamide, n-decane, N,N-diethylacetamide, cyclopentane, acetic anhydride, n-tridecane, n-butyl benzoate, isopropanol, toluene, hydrogen, 4,4-dimethylpentene-1, trimethylamine, N,N-dimethylacetamide, isobutylene, n-butyl isocyanate, methyl butyrate, n-butylamine, N,N-dimethylformamide, diethyl sulfide, diisobutylene, tetrahydrofuran, 4-methylpentene-1, p-xylene, p-dioxane, trimethylamine, 1-bromo-2-chlorethane, octene-1, 2-methylbutene-2, cumene, methyl vinyl sulfide, n-butyronitrile, 2-methylbutene-1, ethylbenzene, n-hexadecene, 2-butanone, n-butyl isothiocyanate, methyl 3-cyanopropionate, tri-n-butylamine, 3-methyl-2-butanone, isobutyronitrile, di-n-butylamine, methyl chloroacetate, 3-methylbutene-1, 1,2-dibromoethane, dimethylamine, benzaldehyde, chloroform, 2-ethylhexene-1, 1,4 dichlorobutene-2, tri-n-butylphosphine, dimethylphosphine, methyl cyanoacetate, carbon tetrachloride, bromotrichloromethane, di-n-butylphosphine, acetaldehyde, propionaldehyde and phosphine.

The chain transfer agent can be added into the reaction mixture in any suitable way. It may be comprised in the polymerization initiator composition (in particular, if the chain transfer agent is at the same time the organic solvent for the initiator, as described above). Alternatively, the modifier may be injected into the monomer feed, such as into the inlet pipes feeding the secondary compressor. As the chain transfer agent is, in general, not fully consumed during one pass through the reactor, it is generally also present at a certain amount in the recycle ethylene returning to the secondary compressor.

### Comonomer

The process of the invention may not only be used for the manufacture of ethylene homopolymers, but also of ethylene copolymers. Such comonomer(s) will be pressurized and injected into the primary and/or secondary compressor and then fed into the polymerization reactor together with ethylene.

Typical comonomers include, without limitation: vinyl ethers such as vinyl methyl ether, vinyl n-butyl ether, vinyl phenyl ether, vinyl beta-hydroxy-ethyl ether, and vinyl dimethylamino-ethyl ether; olefins such as ethylene, propylene, butene-1, cis-butene-2, trans-butene-2, isobutylene, 3,3,-dimethylbutene-1, 4-methylpentene-1, hexane-1, octene-1, and styrene; vinyl-type esters such as vinyl acetate, vinyl butyrate, vinyl pivalate, and vinylene carbonate; haloolefins such as vinyl fluoride, vinylidene fluoride, tetrafluoroethylene, vinyl chloride, vinylidene chloride, tetrachloroethylene, and chlorotrifluoroethylene; acrylic-type esters such as methyl acrylate, ethyl acrylate, n-butyl acrylate, t-butyl acrylate, 2-ethylhexyl acrylate, alpha-cyanoisopropyl acrylate, beta-cyanoethyl acrylate, o-(3-phenylpropan-1,3,-dionyl)phenyl acrylate, methyl methacrylate, n-butyl methacrylate, t-butyl methacrylate, cyclohexyl methacrylate, 2-ethylhexyl methacrylate, methyl methacrylate, glycidyl methacrylate, beta-hydroxethyl methacrylate, beta-hydroxpropyl methacrylate, 3-hydroxy-4-carbo-methoxy-phenyl methacrylate, N,N-dimethylaminoethyl methacrylate, t-butylaminoethyl methacrylate, 2-(1-aziridinyl)ethyl methacrylate, diethyl fumarate, diethyl maleate, and methyl crotonate; other acrylic-type derivatives such as acrylic acid, methacrylic acid, crotonic acid, maleic acid, methyl hydroxy, maleate, itaconic acid, acrylonitrile, fumaronitrile, N,N-dimethylacrylamide, N-isopropylacrylamide, N-t-butylacrylamide, N-phenylacrylamide, diacetone acrylamide, methacrylamide, N-phenylmethacrylamide, N-ethylmaleimide, and maleic anhydride; and other compounds such as allyl alcohol, vinyltrimethylsilane, vinyltriethoxysilane, N-vinylcarbazole, N-vinyl-N-methylacetamide, vinyldibutylphosphine oxide, vinyldiphenylphosphine oxide, bis-(2-chloroethyl) vinylphosphonate and vinyl methyl sulfide.

Examples of preferred comonomers are vinyl acetate, methacrylate, butyl acrylate and acrylic acid. In some comonomer-containing polyethylenes the amount of comonomer is below 10 % by weight, but may also be 5 % by weight or lower, 3 % by weight or lower, or even 1.5 % by weight or lower. In other comonomer-containing polyethylenes the amount of comonomer may however be 10 % by weight or higher, such as 15, 20, or 30 % by weight or higher, depending on the desired end-use of the polymer.

Generally, the purity of the ethylene feed suitable for use in processes according to the present invention is as provided by state-of-the-art steam crackers. In order not to interfere with the radical initiation reaction, the oxygen content in the feed should be below 5 ppm.

### Polymerization Process

The polymerization initiator compositions according to the present invention can be prepared in a mixing tank prior to being fed into the polymerization reactor, or they can be prepared in situ if both solvent and initiator are being supplied from separate storage tanks and mixed with each other in the line supplying them to the reactor.

The polymerization initiator compositions of the present invention are suitably handled in closed vessels or containers under pressure to avoid evaporation of the organic solvent. Certain of the C₃ to C₆ hydrocarbons suitable for use as organic solvents in the polymerization initiator compositions according to the present invention as described above are gaseous at room temperature and atmospheric pressure, so in order to keep them liquid they have to be handled in pressurized vessels. However, one advantage of using an organic solvent according to the present invention, which solvent is more volatile than the high boiling ones conventionally used is that undesired spontaneous peroxide decomposition reactions can be avoided, simply by opening the vessel and letting the organic solvent evaporate, thereby cooling the entire solvent/peroxide mixture and reducing the likelihood of a runaway reaction. This increases the safety when handling peroxide-containing compositions.

### Tubular reactor

The tubular reactor usually has an initial part to which the monomer(s) are fed from the secondary compressor and wherein they are heated to the desired reaction start temperature, usually to at least about 120°C, preferably at least about 135°C, or in some cases even to at least about 160°C. Once the desired temperature is reached, polymerization initiator composition is injected to start the reaction. The pressure in the tubular reactor is generally from about 210 to about 320 MPa.

In the process of the invention, polymerization in the tubular reactor is carried out in several reaction zones, each reaction zone commencing at an initiator injection point. The injected peroxide initiator decomposes into free radicals, which start the polymerization. Further points for injecting the peroxide initiator composition are located downstream along the length of the reactor. Preferably, the reactor has a total of at least two, preferably at least four, more preferably at least six distinct injection points, thereby giving rise to at least two, at least four, or at least six, respectively, reaction zones. In each reaction zone the temperature of the reaction mixture rises due to the exothermic nature of the polymerization. As the temperature rises, initiator decomposition and polymerization increase in rate, accelerating the heat generation and causing the temperature to rise further. As initiator is consumed, initiation and polymerization slow down and, at the point where heat generation equals heat transferred away from the reaction mixture through the reactor walls, the temperature begins to fall. The reaction mixture is also cooled by the injection of fresh (cooler) monomer side-streams and by external cooling (cooling jackets through which water or another cooling fluid is circulated). Thus, as the reaction mixture travels along the length of the reactor, the temperature of the reaction mixture increases to a peak and then decreases until the next initiator injection point is reached, whereupon the process begins again. A characteristic reaction temperature profile is shown e.g. in co-pending application PCT/US2008/087501, Figs. 3 and 4.

The maximum temperature for each reaction zone will advantageously be in the range of from about 200°C to about 335°C. Preferably, in at least one reaction zone the peak temperature will be in the range from about 280°C to about 335°C, preferably from about 290°C to about 320°C. The increase in temperature in a reaction zone is proportional to the amount of polymer made in that reactor zone, and so operating at high maximum temperatures favours high conversion. However, the kinetics of ethylene polymerization are such that as the temperature rises, chain transfer to polymer increases relative to the propagation of linear chains, and also the polydispersity index increases, resulting in an increase in the haze value of the polymer produced. Accordingly, when it is desired to manufacture a low haze grade of polymer, it will be necessary to operate at lower peak temperatures. Preferably, in each reaction zone upstream of an initiator injection point the reaction mixture is cooled to at least 20°C below the peak temperature of that reaction zone. Molecular weight is controlled by the introduction of chain transfer agents, either together with the feed, or separately downstream of the reactor inlet.

### Autoclave reactor

The autoclave reactor is usually a cylinder-shaped continuous stirred tank reactor, with a residence time of about 20 to 60 seconds. The ethylene and optionally comonomer(s) are fed into the reactor at one or more points, and so is the polymerization initiator composition. If desired, additional chain transfer agent may be added, either together with the monomer feed, separately or as part of the polymerization initiator composition.

Also the autoclave reactor may have several reaction zones with different, increasing polymerization temperatures. The reaction zones can be divided from each other e.g. by means of baffles within the reactor. Within each such stage, internally or externally operated stirrers provide for back-mixing of the reaction mixture, but back-mixing between these stages is usually avoided. The preparation of the monomer feed, the polymerization initiator composition, and the components of this composition (as well as their concentration) are similar to what is reported above for the tubular reactor. The pressure in the autoclave reactor is generally from about 120 to about 210 MPa.

### Product separation and re-cycle

The heated reactor (both tubular and autoclave) effluent contains polymer, unreacted monomer(s), residual transfer agent, if any, and residual organic solvent (initially used to dissolve the initiator). The effluent first passes a pressure let down valve, which lowers the effluent pressure so that the effluent is no longer in the single phase and starts to form two phases, a monomer rich phase with unreacted monomer(s) and a polymer rich phase.

The reactor effluent is first fed into a high pressure separator (HPS), which operates at a pressure that is below the pressure at the reactor outlet, e.g. at least about 200, preferably at least about 250 bar. The overhead gas from the HPS is cooled by a heat exchanger and recycled into the secondary compressor. Knock-out vessels may be used to de-wax and purify the recycle stream. The polymer-enriched liquid effluent of the HPS is optionally fed into a medium pressure separator (MPS, see WO 2007/134670 and co-pending application PCT/US2008/087501) which operates at pressures between the HPS and the LPS discussed below, thus e.g. at between about 10 and about 250 bar. After the MPS (or directly after the HPS) the polymer-rich liquid is fed into a low pressure separator (LPS) which works at a pressure lower than that of the MPS and HPS, thus lower than about 20 barg, preferably lower than 10 barg, and most preferably lower than about 1 barg. Separation between ethylene and optional monomers, such as vinyl acetate, occurs in the LPS. The overhead from the LPS is recycled back to the primary compressor. Part of the overhead gas of the LPS is sent to outside battery limits for purification, thereby limiting the build-up of impurities in the system. The molten polymer exiting the LPS is then charged to a conventional extruder, where it is combined with conventional additives, and then to a pelletizer for finishing.

One advantage of the process of the present invention is that the level of the organic initiator solvent in the recycle monomers, in particular in the case of vinyl acetate as comonomer, is considerably lower than in comparable processes where a C₈ or higher hydrocarbon is used as initiator solvent. Therefore, especially in case the initiator solvent is at the same time a chain transfer agent which is consumed during the polymerization reaction, less material needs to be recycled, which saves energy. Furthermore, more of the unreacted monomer can be re-used and fed back into the reactor feed without the need for additional purification, due to an increased purity of the recycle monomer. In some cases (vinyl acetate as comonomer) it is difficult and costly to separate the unreacted monomer from the organic initiator solvent (or separation is energy- and therefore cost-intensive), so that a relatively high amount of such monomer needs to be disposed of or destroyed as it cannot be re-used. However, for example in the case of vinyl acetate, in the process of the present invention the recycle vinyl acetate may contain less than 1 weight%, and in some cases even less than 0.5 weight% of residual organic initiator solvent (e.g., n-butane), while in comparable processes of the prior art up to 10 weight% or even more of the initiator solvent remain in the unreacted vinyl acetate, as illustrated in the examples below.

### Polymer product

The final polymer product (homo-polyethylene or copolymer of ethylene and one or more of the above-listed comonomers, preferably vinyl acetate) covers the entire range of low density polyethylenes (LDPE) that can be made using radical initiated high pressure processes with tubular or autoclave reactors. Generally, the densities range between about 0.910 and 0.935 g/cm³, the polydispersities between about 5 and about 50, the melt index between about 0.1 and about 500 g/min, and the haze values between about 1 and 20. If desired, high comonomer contents can be realized, e.g. up to about 40 weight% vinyl acetate. The molecular weight of the polymer can be modified by using different types and concentrations of chain transfer agent. The polymer density can be influenced by the type and amount of comonomer, and the polymerization temperature. Finally, also the haze can be influenced by the reactor temperature, as well as the reactor pressure and the choice of the polymerization initiator. The main applications of these LDPE grades are in films and in extrusion coating.

An advantage of the present invention is that the final polymer product contains a very low level of residual low boiling organic solvent, such as 500 ppm or less, preferably 200 ppm or less, and in some cases even 50 ppm or less in the hot melt polymer product. The residual solvent levels can be further reduced during the degassing step of the pelletized product, which degassing step is needed to remove the ethylene before final packaging. Due to the high volatility of the light hydrocarbon solvents according to the present invention these solvents are essentially removed during the ethylene degassing step. These residual solvent levels are considerably lower in polymers made by a process according to the present invention than in polymers made in otherwise identical processes where the initiator (mixture) is however dissolved in C₈ or higher hydrocarbons, where easily residual solvent levels of 1000 ppm or more can be observed.

Other polymer properties, such as melt index, polydispersity or haze are substantially identical and not affected by the use of a different initiator solvent. Also, all process parameters are essentially identical. Therefore, overall, a higher quality product can be obtained using the process of the present invention than with a comparable prior art process. For example, if n-butane is used to dissolve the polymerization initiator (mixture) in accordance with the present invention, low levels of down to about 40 ppm n-butane in the hot melt product, and almost no detectable n-butane level in the finished, packed polymer pellets, can be achieved as demonstrated in the examples below. This is especially beneficial for grades used e.g. for medical applications or food packaging. Furthermore, emissions from processing lines, such as extrusion coating line, are reduced due to the lower level of residual solvents in the polymer product.

The invention is further illustrated, without meant to be limiting, by means of the following examples.

### EXAMPLES

### Example 1: n-Butane as initiator solvent for the production of ethylene/vinyl acetate copolymers

To quantify the effect of an initiator solvent according to the present invention, various test runs with ethylene/vinyl acetate (VA) as comonomers were conducted in a tubular reactor. For every grade tested, a comparison was made between using n-butane as initiator solvent (according to the present invention) and using iso-octane (comparative examples). Table 1 below lists the eight grades (four iso-octane comparative grades, and four n-butane grades) produced in these test runs.

**Table 1:**

| **Example #** | **Isooctane Grade (comparative)** | **Butane Grade (inventive)** | **MI [g/10 min] (based on ASTM-1238)** | **Wt. % VA in PE product** |
|---|---|---|---|---|
| 1 | A | B | 32 | 19.3 |
| 2 | C | D | 1.5 | 19.3 |
| | | E | | |
| 2 | F | G | 3.2 | 29 |
| 3 | H | I | 424 | 27.8 |

For preparing the peroxide initiator composition 178 kg of a peroxide cocktail consisting of five different peroxides was dissolved in 681 1 of n-butane. Additionally, 0.363 kg of ethanol and 2.27 kg of a stabilizing agent were added. Propylene was used as chain transfer agent. Except for the initiator solvent, the run conditions for the respective compared n-butane and iso-octane grades were essentially identical. As an example, the run conditions for the grades B (n-butane) and A (iso-octane) are listed below in Table 2:

**Table 2:**

| **Operating parameter:** | **B (inventive)** | **A (comparative)** |
|---|---|---|
| Reactor pressure | 310 MPa | 310 MPa |
| Inlet temperatures | 129/187/157 °C | 129/166/156 °C |
| Peak temperatures | 251/251/243 °C | 252/251/242 °C |
| Initiator consumption | 83.28 1/h | 79.49 1/h |
| Compressor feed rate | 25 tons/h | 25 tons/h |
| Vinyl acetate feed rate (included in compressor feed) | 1.69 tons/h | 1.71 tons/h |
| Propylene rate | 145 kg/h | 143 kg/hr |
| Production rate | 6.214 t/h | 6.214 t/h |

The purity of the recovered vinyl acetate (RVA) improved significantly when using n-butane instead of iso-octane as initiator solvent, as shown in Table 3 below:

**Table 3:**

| **Example #** | **Pre-Run RVA Purity (comparative)** | **Example RVA Purity (inventive)** |
|---|---|---|
| **1** | 93.7 % VA | 95.1 % VA |
| **2** | 95.1 % VA | 99.7 % VA |
| **3** | 84.8 % VA | 99.3 % VA |

The products made with n-butane as initiator solvent had lower residual solvent levels, both at the hot melt (HM) as well as at the finished stage after addition of additive package and pelletizing (i.e., at pack-out (PO)), as shown in Table 4 below:

**Table 4:**

| **[ppm wt.]** | **BvsA** | **D/E vs C** | **G vs F** | **IvsH** |
|---|---|---|---|---|
| **HM Butane** | 63 | 22 | 30 | 55 |
| **HM Isooctane** | --- | 130 | 183 | 1397 |
| **PO Butane** | <1 / <1 | <1 / <1 | <1 / <1 | 3 / 11 |
| **PO Isooctane** | --- | 53 / 56 | 106 / 64 | 1143 / 1350 |

As can be seen from Table 4, residual n-butane solvent levels, both in the hot melt product as well as in the finished product, were very low, and were considerably lower than residual iso-octane levels by a factor of at least 5 up to a factor of about 50 or even more.

Film properties, melting point, polydispersity and the melt index versus viscosity relationship were equivalent for the respective compared grades tested (using n-butane or iso-octane as initiator solvent). No difference in processability was seen between the products made using n-butane as initiator solvent and the respective comparable products made using iso-octane. As an example, a comparison between grades B (made with n-butane as initiator solvent) and A (similar grade, but made with iso-octane as initiator solvent) is shown below in Table 5. Similar results were obtained for the other grades made in examples # 2 and # 3.

**Table 5:**

| **Sample ID** | **Film #1 (inventive)** | **Film #2 (comparative)** |
|---|---|---|
| **Material** | **B** | **A** |
| **Tensile @ Yield (MPa):** | | |
| **MD** | 3.65 | 3.52 |
| **TD** | 3.67 | 3.60 |

| **Ultimate Tensile (MPa):** | | |
|---|---|---|
| **MD** | 14.3 | 14.6 |
| **TD** | 12.9 | 12.2 |

| **Elongation @ Yield (%):** | | |
|---|---|---|
| **MD** | 9.8 | 8.6 |
| **TD** | 9.1 | 8.5 |

| **Break Elongation (%):** | | |
|---|---|---|
| **MD** | 586 | 596 |
| **TD** | 582 | 547 |
| **Dart Drop (g/mil)** | 62 | 57 |
| **Haze** | 4.0 | 6.1 |
| **Gloss** | 80 | 74 |

| | | |
|---|---|---|
| Tensile and elongation properties were measured based on ASTM D882, dart drop was measured based on ASTM D1709, gloss was measured based on ASTM D2457, and haze was measured based on ASTM D1003. | | |

### Example 2: n-Butane as initiator solvent for the production of ethylene homopolymers

Examples are given below of two ethylene homopolymer grades produced in a multizone autoclave reactor using n-butane and OMS (oil and mineral spirits) are used as initiator solvents for grade A (whereby the OMS solvent was used to allow melt index control of the product), and n-butane only as initiator solvent for grade B. Details of the reaction conditions are given in Table 6 below.

The values given in Table 6 for the residual solvent content in the product grades A and B, respectively, are the average values of at least four samples of products produced at different time periods. The residual solvent - with atmospheric boiling point higher than or equal to 180 °C - was analysed by using multiple headspace extraction GC. The level of residual solvent was significantly lower for product B where only initiator cocktails based on butane solvent were used.

**Table 6:**

| **Reactor type** | Multizone autoclave | | |
|---|---|---|---|
| Product | **A** | | **B** |
| Reactor pressure Mpa | 153 | | 188 |
| Temperature top °C | 258 | | 258 |
| Temperature bottom °C | 273 | | 273 |
| Peroxide solvent | butane + OMS | | butane |
| | | | |
| Initiator cocktail injection rate lit/h | 47.3 | | 53.2 |
| | | | |
| Feed gas rate ton/h | 75 | | 75 |
| Production rate ton/h | 14.4 | | 14.3 |
| Residual solvent in product with BP ≥ 180 °C wppm (average of 4 commercial samples) | 594 | | 118.5 |

## Claims

1. A process for the manufacture of ethylene homo- and copolymers, the process comprising the steps of:
introducing ethylene and optionally comonomer(s) into a reactor,
contacting the ethylene and optionally comonomer(s) in the reactor with a polymerization initiator composition under high pressure polymerization conditions to form ethylene homo- or copolymer, and
separating the ethylene homo- or copolymer;
wherein the polymerization initiator composition comprises at least one organic peroxide dissolved in an organic solvent; and
wherein the organic solvent is a saturated or unsaturated, linear, branched or cyclic C₃ to C₄ hydrocarbon or a mixture thereof.

2. The process of claim 1, wherein the organic solvent is propylene, n-butane or a mixture thereof.

3. The process of claim 1, wherein the organic solvent is not propylene, n-butane or a mixture thereof.

4. The process of any of the preceding claims, wherein the at least one organic peroxide is an organic peroxide selected from the group consisting of tert-butylperoxybenzoate, tert-butyl peroxy-3,5,5-trimethylhexanoate, tert-butyl-2 ethylperoxyhexanoate, tert-butyl peroxyisobutyrate, di(2-ethylhexyl)peroxycarbonate, tert-butylperoxypivalate, 2,2-di(tert-butylperoxy)butane, di(tert-butyl)peroxide, di(sec-butyl)peroxydicarbonate, t-amyl versions of tert-butyl perneodecanoate and of tert-butyl perpivalate, and any mixtures of the aforementioned.

5. The process of any of the preceding claims, wherein the organic solvent also serves as a chain transfer agent.

6. The process of any of the preceding claims, wherein an additional chain transfer agent is added to the reactor, and the additional chain transfer agent is preferably propionaldehyde.

7. The process of any of the preceding claims, wherein the peroxide concentration in the organic solvent is from about 5 to about 50 weight%, preferably from about 10 to about 40 weight%, based on the entire solution of the peroxide in the organic solvent.

8. The process of any of the preceding claims, wherein the reactor is an autoclave or a tubular reactor.

9. The process of any of the preceding claims, wherein the comonomer, if present, is vinyl acetate, methacrylate, butyl acrylate or acrylic acid, or mixtures thereof.

10. The process of any of the preceding claims, wherein the high pressure polymerization conditions comprise temperatures from about 120°C to about 335°C, and pressures from about 120 MPa to about 320 MPa.

11. The process of any of the preceding claims, wherein the reactor is a tubular reactor, and wherein the polymerization initiator composition is injected into the tubular reactor at more that one location, preferably at at least two, at least four or at least six distinct injection points along the length of the tubular reactor.

12. Use of a C₃ to C₄ hydrocarbon or a mixture thereof as a solvent for an organic peroxide which is an initiator in the polymerization of ethylene and optionally comonomer(s) in a reactor under high pressure polymerization conditions, wherein the C₃ to C₄ hydrocarbon is a saturated or unsaturated, linear, branched or cyclic C₃ to C₄ hydrocarbon.

## Patentansprüche

1. Verfahren zur Herstellung von Homopolymeren und Copolymeren von Ethylen, bei dem in Stufen:
Ethylen und gegebenenfalls Comonomer(e) in einen Reaktor eingebracht werden,
das Ethylen und gegebenenfalls das bzw. die Comonomer(e) in dem Reaktor m i t Polymerisationsinitiatorzus ammensetzung unter Hochdruckpolymerisationsbedingungen kontaktiert werden, so dass Homo- oder Copolymer von Ethylen gebildet wird, und
das Homo- oder Copolymer von Ethylen abgetrennt wird,
wobei die Polymerisationsinitiatorzusammensetzung mindestens ein organisches Peroxid umfasst, das in organischem Lösungsmittel gelöst ist, und
wobei das organische Lösungsmittel ein gesättigter oder ungesättigter linearer, verzweigter oder cyclischer C₃- bis C₄-Kohlenwasserstoff oder eine Mischung davon ist.

2. Verfahren nach Anspruch 1, wobei das organische Lösungsmittel Propylen, n-Butan oder eine Mischung davon ist.

3. Verfahren nach Anspruch 1, wobei das organische Lösungsmittel nicht Propylen, n-Butan oder eine Mischung davon ist.

4. Verfahren nach einem der vorhergehenden Ansprüche, wobei das mindestens eine organische Peroxid ein organisches Peroxid ist, das ausgewählt ist aus der Gruppe bestehend aus tert.-Butylperoxybenzoat, tert.-Butylperoxy-3,5,5-trimethylhexanoat, tert.-Butyl-2-ethylperoxyhexanoat, tert.-Butylperoxyisobutyrat, Di(2-ethylhexyl)peroxycarbonat, tert.-Butylperoxypivalat, 2,2-Di(tert.-butylperoxy)-butan, Di(tert.-butyl)peroxid, Di(sec-butyl)peroxydicarbonat, t-Amyl-Versionen von tert.-Butylperneodecanoat und von tert.-Butylperpivalat und beliebige Mischungen der vorstehenden.

5. Verfahren nach einem der vorhergehenden Ansprüche, wobei das organische Lösungsmittel ferner als Kettenübertragungsmittel dient.

6. Verfahren nach einem der vorhergehenden Ansprüche, wobei dem Reaktor ein zusätzliches Kettenübertragungsmittel zugesetzt wird, und das zusätzliche Kettenübertragungsmittel vorzugsweise Propionaldehyd ist.

7. Verfahren nach einem der vorhergehenden Ansprüche, wobei die Peroxidkonzentration in dem organischen Lösungsmittel von etwa 5 bis etwa 50 Gew.-%, vorzugsweise von etwa 10 bis etwa 40 Gew.-% beträgt, bezogen auf die gesamte Lösung des Peroxids in dem organischen Lösungsmittel.

8. Verfahren nach einem der vorhergehenden Ansprüche, wobei der Reaktor ein Autoklav oder ein Röhrenreaktor ist.

9. Verfahren nach einem der vorhergehenden Ansprüche, wobei das Comonomer, falls vorhanden, Vinylacetat, Methacrylat, Butylacrylat oder Acrylsäure oder Mischungen davon ist.

10. Verfahren nach einem der vorhergehenden Ansprüche, wobei die Hochdruckpolymerisationsbedingungen Temperaturen von etwa 120°C bis etwa 335°C und Drücke von etwa 120 MPa bis etwa 320 MPa umfassen.

11. Verfahren nach einem der vorhergehenden Ansprüche, wobei der Reaktor ein Röhrenreaktor ist und wobei die Polymerisationsinitiatorzusammensetzung in dem Röhrenreaktor an mehr als einer Stelle, insbesondere an mindestens zwei, mindestens vier oder mindestens sechs verschiedenen Einspritzpunkten entlang der Röhrenreaktorlänge eingespritzt wird.

12. Verwendung eines C₃- bis C₄-Kohlenwasserstoffs oder einer Mischung davon als Lösungsmittel für organisches Peroxid, welches bei der Polymerisation von Ethylen und ggf. Comon omer(en) i n einem Reaktor unter Hochdruckpolymerisationsbedingungen ein Initiator ist, wobei der C₃- bis C₄-Kohlenwasserstoff ein gesättigter oder ungesättigter linearer, verzweigter oder cyclischer C₃- bis C₄-Kohlenwasserstoff ist.

## Revendications

1. Procédé de fabrication d'homo- et copolymères d'éthylène, le procédé comprenant les étapes consistant à :
introduire de l'éthylène et éventuellement un ou plusieurs comonomère(s) dans un réacteur,
mettre en contact l'éthylène et éventuellement le(s) comonomère(s) dans le réacteur avec une composition d'amorceur de polymérisation dans des conditions de polymérisation sous haute pression pour former un homo- ou copolymère d'éthylène, et
séparer l'homo- ou copolymère d'éthylène ;
dans lequel la composition d'amorceur de polymérisation comprend au moins un peroxyde organique dissous dans un solvant organique ; et
dans lequel le solvant organique est un hydrocarbure en C₃ à C₄ linéaire, ramifié ou cyclique, saturé ou insaturé, ou un de leurs mélanges.

2. Procédé selon la revendication 1, dans lequel le solvant organique est du propylène, du n-butane ou un de leurs mélanges.

3. Procédé selon la revendication 1, dans lequel le solvant organique n'est pas du propylène, du n-butane ou un de leurs mélanges.

4. Procédé selon l'une quelconque des revendications précédentes, dans lequel le au moins un peroxyde organique est un peroxyde organique choisi dans le groupe constitué par le peroxybenzoate de tert-butyle, le peroxy-3,5,5-triméthylhexanoate de tert-butyle, le 2-éthylperoxyhexanoate de tert-butyle, le peroxyisobutyrate de tert-butyle, le peroxycarbonate de di(2-éthylhexyle), le peroxypivalate de tert-butyle, le 2,2-di(tert-butylperoxy)butane, le peroxyde de di(tert-butyle), le peroxydicarbonate de di(s-butyle), les versions t-amyle de pernéodécanoate de tert-butyle et de perpivalate de tert-butyle, et des mélanges quelconques de ceux-ci.

5. Procédé selon l'une quelconque des revendications précédentes, dans lequel le solvant organique sert aussi d'agent de transfert de chaîne.

6. Procédé selon l'une quelconque des revendications précédentes, dans lequel un agent de transfert de chaîne supplémentaire est ajouté dans le réacteur, et l'agent de transfert de chaîne supplémentaire est de préférence du propionaldéhyde.

7. Procédé selon l'une quelconque des revendications précédentes, dans lequel la concentration de peroxyde dans le solvant organique est d'environ 5 à environ 50 % en poids, de préférence d'environ 10 à environ 40 % en poids, par rapport à la solution totale du peroxyde dans le solvant organique.

8. Procédé selon l'une quelconque des revendications précédentes, dans lequel le réacteur est un autoclave ou un réacteur tubulaire.

9. Procédé selon l'une quelconque des revendications précédentes, dans lequel le comonomère, s'il est présent, est l'acétate de vinyle, un méthacrylate, l'acrylate de butyle ou l'acide acrylique, ou des mélanges de ceux-ci.

10. Procédé selon l'une quelconque des revendications précédentes, dans lequel les conditions de polymérisation sous haute pression comprennent des températures d'environ 120°C à environ 335°C, et des pressions d'environ 120 MPa à environ 320 MPa.

11. Procédé selon l'une quelconque des revendications précédentes, dans lequel le réacteur est un réacteur tubulaire, et dans lequel la composition d'amorceur de polymérisation est injectée dans le réacteur tubulaire en plus d'un endroit, de préférence en au moins deux, au moins quatre ou au moins six points d'injection distincts le long du réacteur tubulaire.

12. Utilisation d'un hydrocarbure en C₃ à C₄ ou d'un de leurs mélanges en tant que solvant pour un peroxyde organique qui est un amorceur dans la polymérisation de l'éthylène, et éventuellement d'un ou plusieurs comonomère(s), dans un réacteur dans des conditions de polymérisation sous haute pression, dans laquelle l'hydrocarbure en C₃ à C₄ est un hydrocarbure en C₃ à C₄ linéaire, ramifié ou cyclique, saturé ou insaturé.
